# EUROPEAN PATENT APPLICATION

(11) **EP 2 381 191 A1**
(43) Date of publication of application: **26.10.2011**
(21) Application number: 09836187.6
(22) Date of filing: 22.12.2009
(51) Int. Cl.: F25B 1/00

(54) **AIR-CONDITIONING DEVICE AND CONTROL METHOD THEREFOR**

(30) Priority: 29.12.2008 JP 2008335746
(71) Applicant: Daikin Industries, Ltd., Osaka-shi, Osaka 530-8323 (JP)
(72) Inventor: KINOSHITA, Hidehiko, Sakai-shi Osaka 591-8511 (JP); YAMADA, Tsuyoshi, Sakai-shi Osaka 591-8511 (JP)
(74) Representative: HOFFMANN EITLE
(86) International application number: PCT/JP2009/007101
(87) International publication number: WO 2010/076847

(57) **Abstract**

An air conditioning apparatus (1) is equipped with a refrigerant circuit (10), an electromagnetic induction heating unit (6), and an outdoor controller (11a). The refrigerant circuit (10) includes a compressor (21), an indoor heat exchanger (41), an expansion valve (24), and an outdoor heat exchanger (23). The electromagnetic induction heating unit (6) heats refrigerant flowing through the refrigerant circuit (10). The outdoor controller (11a) executes first stop control in a case of causing the compressor (21) to stop at a time when the compressor (21) and the electromagnetic inducting heating unit (6) are both operating. The first stop control is control that issues a stop signal for stopping the electromagnetic induction heating unit (6) and then, after the elapse of a predetermined amount of time, issues a stop signal for stopping the compressor (21). Because of this, the heating of an empty part by the electromagnetic induction heating unit (6) can be suppressed.

## Description

### TECHNICAL FIELD

The present invention relates to an air conditioning apparatus and a method of controlling the air conditioning apparatus.

### BACKGROUND ART

Among air conditioning apparatus, there are air conditioning apparatus having a refrigerant heating unit that heats refrigerant flowing through a refrigerant circuit (e.g., see JP-A No. 2007-255736, which is patent citation 1).

Usually, in air conditioning apparatus having a refrigerant heating unit, a stop signal for stopping the refrigerant heating unit is also issued at the same time as the issuance of a stop signal for stopping the compressor. This is because when the compressor is stopped and the refrigerant heating unit is acting under a circumstance where the refrigerant does not, or virtually does not, circulate inside the refrigerant circuit, this can lead to a deterioration of parts such as pipes caused by the heating of an empty part.

### SUMMARY OF THE INVENTION

### <Technical Problem>

However, even if the stop signals were issued at the same time, this does not mean that the actions of the compressor and the refrigerant heating unit will in reality stop at the same time. So even if it is a short amount of time, a circumstance where the refrigerant heating unit is acting even though the compressor is stopped can arise.

It is an object of the present invention to provide an air conditioning apparatus that can suppress the heating of an empty part by a refrigerant heating unit and a method of controlling the air conditioning apparatus.

### <Solution to the Problem>

An air conditioning apparatus pertaining to a first aspect of the present invention is equipped with a refrigerant circuit, a refrigerant heating unit, and a stop signal controller. The refrigerant circuit includes a compressor, an indoor heat exchanger, a pressure reducing mechanism, and an outdoor heat exchanger. The refrigerant heating unit heats refrigerant flowing through the refrigerant circuit. The stop signal controller executes first stop control in a case of causing the compressor to stop at a time when the compressor and the refrigerant heating unit are both operating. The first stop control is control that issues a stop signal for stopping the refrigerant heating unit and then, after the elapse of a first amount of time, issues a stop signal for stopping the compressor.

Here, the timing of the issuance of the stop signal for stopping the compressor is delayed a predetermined amount of time from the timing of the issuance of the stop signal for stopping the refrigerant heating unit, and the compressor residually operates. Because of this, a circumstance where the refrigerant heating unit continues operating even after the compressor stops is avoided, and the heating of an empty part by the refrigerant heating unit is suppressed.

An air conditioning apparatus pertaining to a second aspect of the present invention is the air conditioning apparatus pertaining to the first aspect of present the invention and is further equipped with a heating unit controller. The heating unit controller controls the action of the refrigerant heating unit. The first stop control is control that issues the stop signal for stopping the refrigerant heating unit to the heating unit controller and then, after the elapse of the first amount of time, issues the stop signal for stopping the compressor.

Here, the refrigerant heating unit is not directly controlled by the stop signal controller but is indirectly controlled via the heating unit controller. Consequently, a delay in communication can arise between after the signal for stopping the refrigerant heating unit has been issued from the stop signal controller and until that stop signal reaches the refrigerant heating unit and the refrigerant heating unit actually stops. However, here, because the compressor residually operates, a circumstance where the refrigerant heating unit continues operating even after the compressor stops is avoided, and the heating of an empty part by the refrigerant heating unit is suppressed.

An air conditioning apparatus pertaining to a third aspect of the present invention is the air conditioning apparatus pertaining to the first or second aspect of present the invention and is further equipped with an indoor blower. The indoor blower blows air to the indoor heat exchanger. The first stop control is control that issues the stop signal for stopping the refrigerant heating unit and then, after the elapse of a second amount of time, issues a stop signal for stopping the indoor blower.

Here, the timing of the issuance of the stop signal for stopping the indoor blower is also, like in the case of the compressor, delayed a predetermined amount of time from the timing of the issuance of the stop signal for stopping the refrigerant heating unit, and the indoor blower residually operates together with the compressor. Usually, an excessive rise on the high pressure side of the refrigerant circuit is feared if the compressor is acting even though the indoor blower is stopped. However, here, because the indoor blower also residually operates together with the compressor, a circumstance where the compressor continues operating even after the indoor blower stops is avoided, and an excessive rise on the high pressure side of the refrigerant circuit is prevented.

An air conditioning apparatus pertaining to a fourth aspect of the present invention is the air conditioning apparatus pertaining to the third aspect of the present invention, wherein the first stop control is control which, before issuing the stop signal for stopping the indoor blower, issues an operation signal that causes the indoor blower to rotate at a low speed.

Here, the residual operation of the indoor blower is executed at a relatively low speed. Consequently, the residual operation of the indoor blower, which serves the purpose of preventing an excessive rise on the high pressure side of the refrigerant circuit, can be realized while suppressing useless rotation of the indoor blower.

An air conditioning apparatus pertaining to a fifth aspect of the present invention is the air conditioning apparatus pertaining to any of the first to fourth aspects of present the invention and is further equipped with an indoor controller. The indoor controller is housed in an indoor unit together with the indoor heat exchanger. The refrigerant heating unit and the indoor controller are connected in parallel to the stop signal controller.

Here, the refrigerant heating unit and the indoor controller are connected in parallel to the stop signal controller. Under this circumstance, it is feared that a delay in communication will arise between the stop signal controller and the refrigerant heating unit due to communication between the stop signal controller and the indoor controller. However, here, because the compressor residually operates, a circumstance where the refrigerant heating unit continues operating even after the compressor stops is avoided, and the heating of an empty part by the refrigerant heating unit is suppressed.

An air conditioning apparatus pertaining to a sixth aspect of the present invention is the air conditioning apparatus pertaining to any of the first to fifth aspects of the present invention, wherein in a case where it is judged that the compressor is in an abnormal state, the stop signal controller does not execute the first stop control and executes second stop control. The second stop control is control that issues the stop signal for stopping the refrigerant heating unit and then, before the elapse of the first amount of time, issues the stop signal for stopping the compressor.

Here, the residual operation of the compressor is not executed at a time when the compressor is abnormal. Consequently, an abnormality in the compressor can be quickly accommodated.

An air conditioning apparatus pertaining to a seventh aspect of the present invention is the air conditioning apparatus pertaining to any of the first to sixth aspects of the present invention, wherein the refrigerant circuit includes a plurality of the indoor heat exchangers. The plural indoor heat exchangers are connected in parallel to the compressor and are individually housed in multiple indoor units. The stop signal controller lengthens the first amount of time the greater the number of the indoor units there are.

Usually, it is expected that the greater the number of the indoor units there are, the longer the delay time in communication between the stop signal controller and the refrigerant heating unit will become. However, here, because the residual operating time is longer the greater the number of the indoor units there are, residual operations of appropriate lengths are executed.

An air conditioning apparatus pertaining to an eighth aspect of the present invention is the air conditioning apparatus pertaining to any of the first to seventh aspects of the present invention, wherein the first stop control is control which, at the time of a defrosting operation, waits for the end of the defrosting operation, issues the stop signal for stopping the refrigerant heating unit, and then, after the elapse of the first amount of time, issues the stop signal for stopping the compressor.

Here, in a case where it is required that the compressor stop at the time of the defrosting operation under a predetermined condition, the first stop control waits for the end of the defrosting operation and causes the compressor and the refrigerant heating unit to stop. "Under a predetermined condition" is, for example, a case where a stop command for stopping an air conditioning operation has been inputted by a user. Consequently, the defrosting operation is reliably executed.

An air conditioning apparatus control method pertaining to a ninth aspect of the present invention is a method of controlling an air conditioning apparatus having a refrigerant circuit that includes a compressor, an indoor heat exchanger, a pressure reducing mechanism, and an outdoor heat exchanger and a refrigerant heating unit that heats refrigerant flowing through the refrigerant circuit, the method including the step of executing first stop control in a case of causing the compressor to stop at a time when the compressor and the refrigerant heating unit are both operating. The first stop control is control that issues a stop signal for stopping the refrigerant heating unit and then, after the elapse of a first amount of time, issues a stop signal for stopping the compressor.

Here, the timing of the issuance of the stop signal for stopping the compressor is delayed the predetermined amount of time from the timing of the issuance of the stop signal for stopping the refrigerant heating unit, and the compressor residually operates. Because of this, a circumstance where the refrigerant heating unit continues operating even after the compressor stops is avoided, and the heating of an empty part by the refrigerant heating unit is suppressed.

### <Advantageous Effects of the Invention>

In the air conditioning apparatus and the method of controlling the air conditioning apparatus pertaining to the present invention, the timing of the issuance of the stop signal for stopping the compressor is delayed the predetermined amount of time from the timing of the issuance of the stop signal for stopping the refrigerant heating unit, and the compressor residually operates. Because of this, a circumstance where the refrigerant heating unit continues operating even after the compressor stops is avoided, and the heating of an empty part by the refrigerant heating unit is suppressed.

### BRIEF DESCRIPTION OF THE DRAWINGS

FIG. 1 is a refrigerant circuit diagram of an air conditioning apparatus pertaining to an embodiment of the present invention.
FIG. 2 is a perspective view of the exterior of an outdoor unit as seen from its front right side.
FIG. 3 is a perspective view of the outdoor unit with its front panel, its right side panel, and its back panel having been removed therefrom.
FIG. 4 is a perspective view of the outdoor unit with members other than a bottom plate, an outdoor heat exchanger, and outdoor fans having been removed therefrom.
FIG. 5 is a cross-sectional view of an electromagnetic induction heating unit.
FIG. 6 is a flowchart showing stop control of a compressor, an indoor fan, and the electromagnetic induction heating unit.
FIG. 7 is a timing chart of the stopping of the compressor, the indoor fan, and the electromagnetic induction heating unit at the time of execution of a first stop control routine.
FIG. 8 is a refrigerant circuit diagram of an air conditioning apparatus pertaining to another embodiment of the present invention.

### DESCRIPTION OF THE EMBODIMENTS

An air conditioning apparatus 1 and a method of controlling the air conditioning apparatus 1 pertaining to an embodiment of the present invention will be described below with reference to the drawings.

### <Configuration of Air Conditioning Apparatus>

### (Overall Configuration)

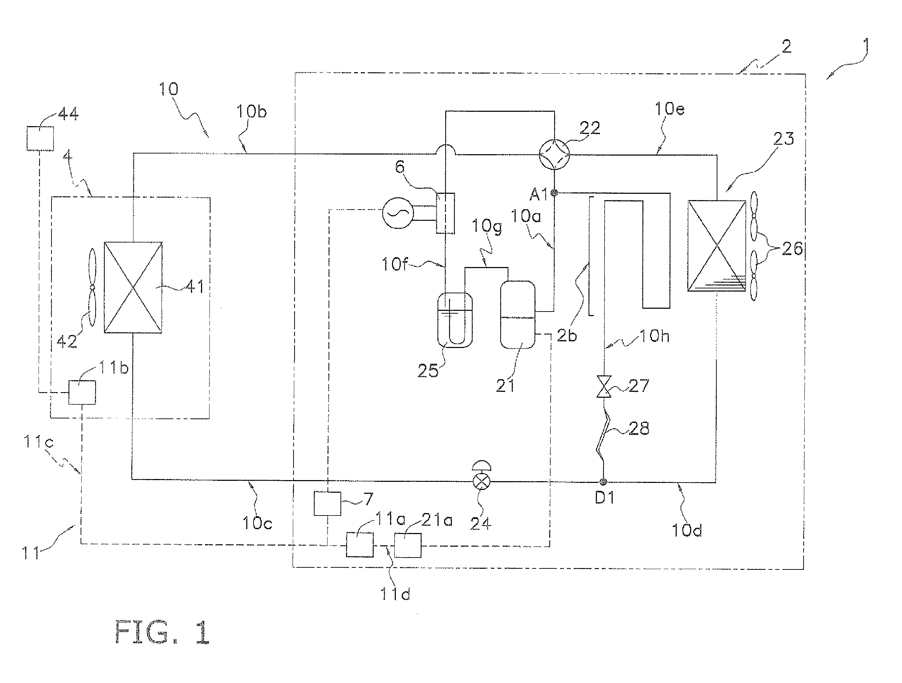

FIG. 1 is a configuration diagram of the air conditioning apparatus 1. As shown in FIG. 1, in the air conditioning apparatus 1, an outdoor unit 2 serving as a heat source-side unit and an indoor unit 4 serving as a utilization-side unit are interconnected by refrigerant pipes, whereby a refrigerant circuit 10 that performs a vapor-compression refrigeration cycle is formed.

The outdoor unit 2 houses a compressor 21, a four-way switching valve 22, an outdoor heat exchanger 23, an expansion valve 24, an accumulator 25, outdoor fans 26, a hot gas bypass valve 27, a capillary tube 28, and an electromagnetic induction heating unit 6. The indoor unit 4 houses an indoor heat exchanger 41 and an indoor fan 42.

The refrigerant circuit 10 has a discharge pipe 10a, a gas pipe 10b, a liquid pipe 10c, an outdoor-side liquid pipe 10d, an outdoor-side gas pipe 10e, an accumulator pipe 10f, a suction pipe 10g, and a hot gas bypass 10h.

The discharge pipe 10a interconnects the compressor 21 and the four-way switching valve 22. The gas pipe 10b interconnects the four-way switching valve 22 and the indoor heat exchanger 41. The liquid pipe 10c interconnects the indoor heat exchanger 41 and the expansion valve 24. The outdoor-side liquid pipe 10d interconnects the expansion valve 24 and the outdoor heat exchanger 23. The outdoor-side gas pipe 10e interconnects the outdoor heat exchanger 23 and the four-way switching valve 22.

The accumulator pipe 10f interconnects the four-way switching valve 22 and the accumulator 25. The electromagnetic induction heating unit 6 is attached to a part of the accumulator pipe 10f. At least the heated portion of the accumulator pipe 10f covered by the electromagnetic induction heating unit 6 is configured such that a stainless steel pipe covers the periphery of a copper pipe. Of the pipes configuring the refrigerant circuit 10, the portions other than that stainless steel pipe are copper pipes.

The suction pipe 10g interconnects the accumulator 25 and the suction side of the compressor 21. The hot gas bypass 10h interconnects a branch paint A1 disposed midway in the discharge pipe 10a and a branch point D1 disposed midway in the outdoor-side liquid pipe 10d.

The hot gas bypass valve 27 is disposed midway in the hot gas bypass 10h. A controller 11 opens and closes the hot gas bypass valve 27 to switch the hot gas bypass 10h between a state where it allows circulation of refrigerant and a state where it does not allow circulation of refrigerant. Further, the capillary tube 28, which reduces the cross-sectional area of the refrigerant circulation passage, is disposed on the downstream side of the hot gas bypass valve 27, and the ratio between the refrigerant circulating through the outdoor heat exchanger 23 and the refrigerant circulating through the hot gas bypass 10h is maintained at a constant at the time of a defrosting operation.

The four-way switching valve 22 can switch between a cooling operation cycle and a heating operation cycle. In FIG. 1, the solid lines represent a state of connection for performing the heating operation and the dashed lines represent a state of connection for performing the cooling operation. At the time of the heating operation, the indoor heat exchanger 41 functions as a condenser and the outdoor heat exchanger 23 functions as an evaporator. At the time of the cooling operation, the outdoor heat exchanger 23 functions as a condenser and the indoor heat exchanger 41 functions as an evaporator.

The outdoor fans 26, which deliver outdoor air to the outdoor heat exchanger 23, are disposed in the neighborhood of the outdoor heat exchanger 23. The indoor fan 42, which delivers room air to the indoor heat exchanger 41, is disposed in the neighborhood of the indoor heat exchanger 41.

The controller 11 has an outdoor controller 11a, which controls the devices placed inside the outdoor unit 2, and an indoor controller 11b, which controls the devices placed inside the indoor unit 4. The outdoor controller 11a and the indoor controller 11b are interconnected by a communication line 11c.

The indoor controller 11b is a control circuit having a CPU and a memory and mainly controls the various electrical devices-such as the indoor fan 42-housed in the indoor unit 4 by reading and executing on the CPU programs stored in the memory. A remote controller 44 is connected to the indoor controller 11b. The remote controller 44 is for a user to input various operation commands (start commands for starting air conditioning operations, stop commands for stopping air conditioning operations, change commands for changing a set temperature Ts, setting commands for setting operation modes such as a heating operation mode and a cooling operation mode, etc.) to the indoor unit 4.

Likewise, the outdoor controller 11a is also a control circuit having a CPU and a memory and mainly controls the various electrical devices-such as the compressor 21, the four-way switching valve 22, the outdoor expansion valve 24, the outdoor fans 26, and the electromagnetic induction heating unit 6-housed in the outdoor unit 2 by reading and executing on the CPU programs stored in the memory.

The outdoor controller 11a references information acquired by the indoor controller 11b while communicating with the indoor controller 11b and unifies the actions of the air conditioning apparatus 1 overall such that the air conditioning apparatus 1 acts in accordance with the various operation commands that have been inputted via the remote controller 44.

The outdoor controller 11a controls the compressor 21 via an inverter board 21a. and controls the electromagnetic induction heating unit 6 via a heating unit controller 7. Further, the outdoor controller 11a is connected to the inverter board 21a via a communication line 11d exiting from a dedicated communication port and is connected to the heating unit controller 7 via the same communication line 11c exiting from the same communication port as the indoor controller 11b.

### (Exterior of Outdoor Unit)

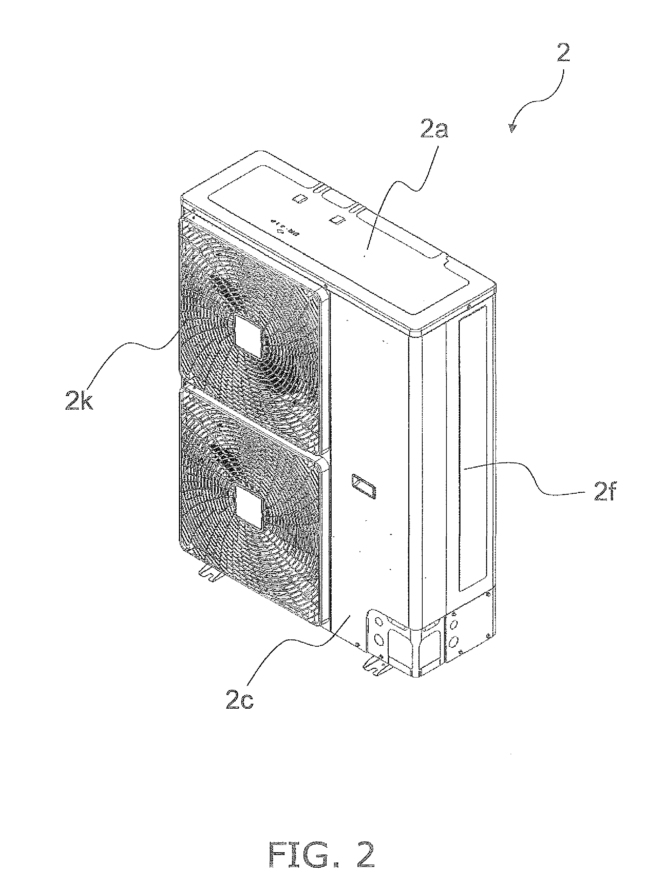

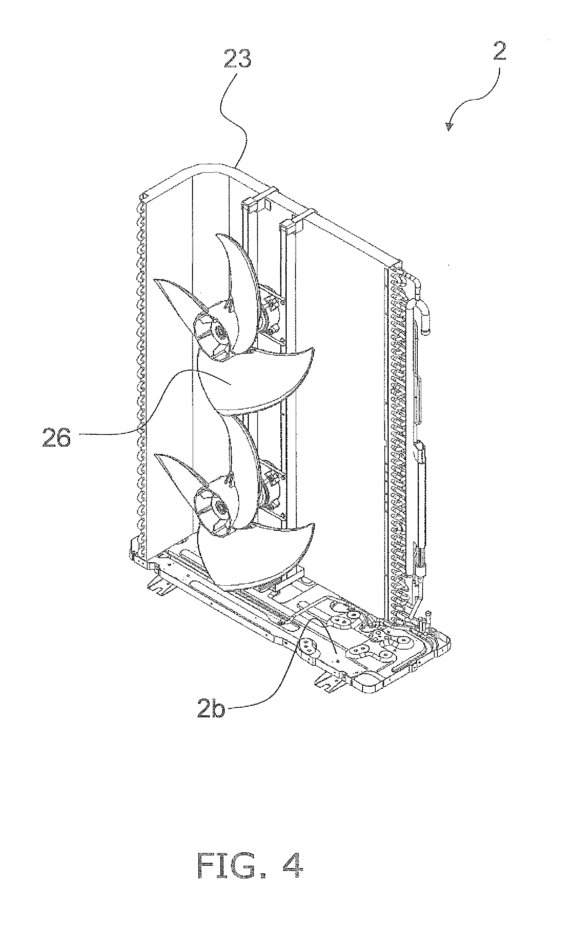

FIG. 2 is a perspective view of the exterior of the outdoor unit 2 as seen from its front right side. As shown in FIG. 2, the outer casing of the outdoor unit 2 is formed in a substantially cuboidal shape by a top plate 2a, a bottom plate 2b (see FIG. 4) that opposes the top plate 2a, a front panel 2c, fan guards 2k, a right side panel 2f, a left side panel (invisible) that opposes the right side panel 2f, and a back panel (invisible) that opposes the front panel 2c and the fan guards 2k.

### (Structure of Interior of Outdoor Unit)

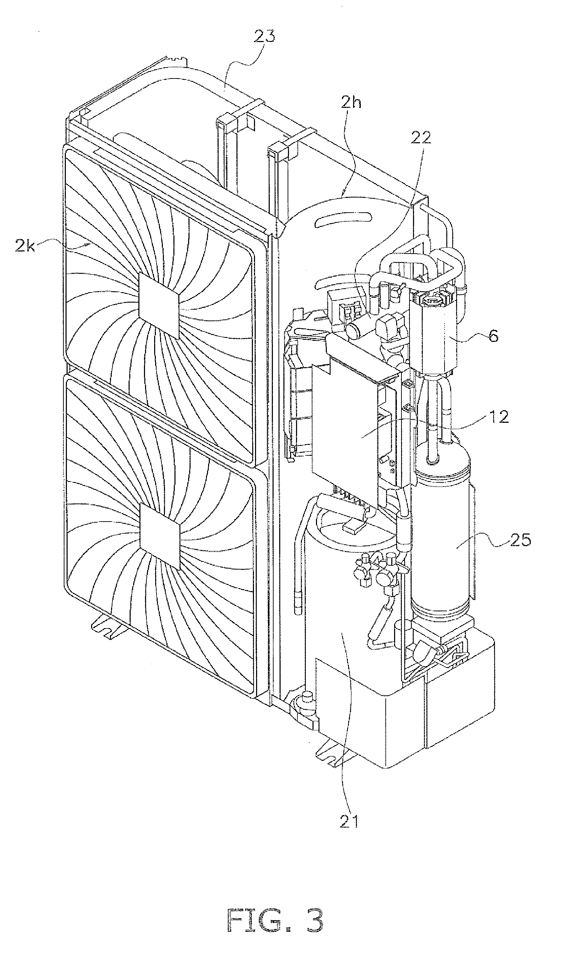

FIG. 3 is a perspective view of the outdoor unit 2 as seen from its front right side with its front panel 2c, its right side panel 2f, and its back panel having been removed therefrom, and FIG. 4 is a perspective view of the outdoor unit 2 as seen from its front right side with members other than bottom plate 2b, the outdoor heat exchanger 23 and the outdoor fans 26 having been removed therefrom. As shown in FIG. 3, the outdoor unit 2 is sectioned by a partition plate 2h into a blower chamber and a machine chamber. The outdoor heat exchanger 23 and the outdoor fans 26 (see FIG. 4) are placed in the blower chamber, and the electromagnetic induction heating unit 6, the compressor 21, and the accumulator 25 are placed in the machine chamber.

As shown in FIG. 4, the outdoor heat exchanger 23 is a fin-and-tube heat exchanger formed in an L shape. Additionally, the two outdoor fans 26 are placed between the fan guards 2k (see FIG. 3) and the outdoor heat exchanger 23 so as to be adjacent to each other in the vertical direction via a support. When the outdoor fans 26 rotate, the outdoor air is sucked in from ventilation openings in the left side panel and in the back panel, passes between the fins of the outdoor heat exchanger 23, and is blown out from the fan guards 2k.

The hot gas bypass 10h is placed on the bottom plate 2b, extends from the machine chamber side where the compressor 21 is positioned to the blower chamber side, makes one round around the blower chamber side bottom portion, and returns to the machine chamber side. About half of the entire length of the hot gas bypass 10h is positioned below the outdoor heat exchanger 23.

### (Structure of Electromagnetic Induction Heating Unit)

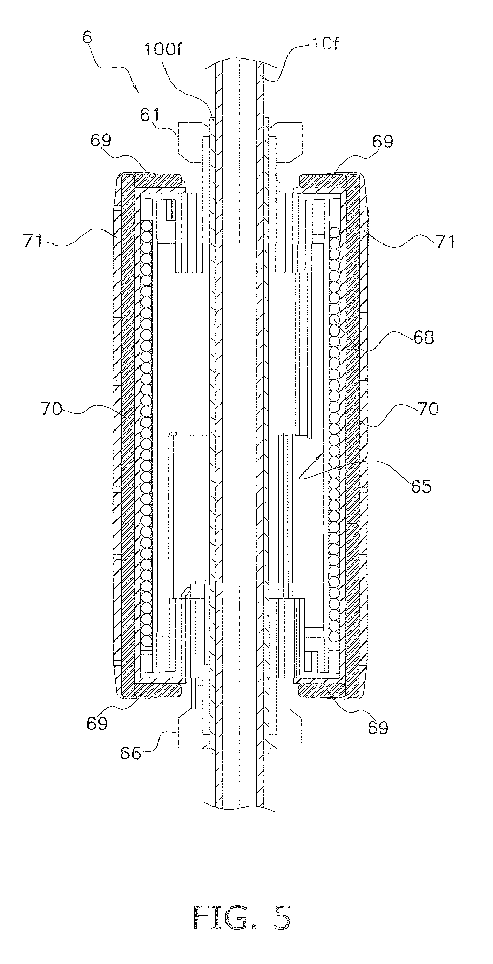

FIG. 5 is a cross-sectional view of the electromagnetic induction heating unit 6. As shown in FIG. 5, the electromagnetic induction heating unit 6 is placed so as to cover the heated portion of the accumulator pipe 10f from its radial direction outer side and heats the heated portion by electromagnetic induction heating. The heated portion of the accumulator pipe 10f has a double pipe structure due to the inside copper pipe and an outside stainless steel pipe 100f. The stainless steel material used for the stainless steel pipe 100f is selected from ferrite stainless steel including 16 to 18% chromium or precipitation-hardening stainless steel including 3 to 5% nickel, 15 to 17.5% chromium, and 3 to 5% copper.

The electromagnetic induction heating unit 6 is first positioned on the accumulator pipe 10f, next its upper end neighborhood is fixed by a first hexagonal nut 61, and finally its lower end neighborhood is fixed by a second hexagonal nut 66.

A coil 68 is spirally coiled around the outer side of a bobbin body 65, with the axial direction of the coil 68 coinciding with the direction in which the accumulator pipe 10f extends. The coil 68 is housed on the inner side of a ferrite case 71. The ferrite case 71 also houses first ferrite portions 69 and a second ferrite portion 70.

The first ferrite portions 69 are formed by ferrite with high magnetic permeability, gather the magnetic flux that arises also in the portion other than the stainless steel pipe 100f when an electric current is passed through the coil 68, and form a path for the magnetic flux. The first ferrite portions 69 are positioned on both end sides of the ferrite case 71.

The second ferrite portion 70 differs in position and shape from the first ferrite portions 69 but functions in the same way as the first ferrite portions 69 and is placed in the neighborhood on the outer side of the bobbin body 65 in the housing portion of the ferrite case 71.

### <Actions of the Air Conditioning Apparatus>

The air conditioning apparatus 1 is capable of being switched to either one of the cooling operation or the heating operation by the four-way switching valve 22.

### (Cooling Operation)

At the time of the cooling operation, the four-way switching valve 22 is set in the state indicated by the dashed lines in FIG. 1. When the compressor 21 is driven in this state, a vapor-compression refrigeration cycle where the outdoor heat exchanger 23 becomes a condenser and the indoor heat exchanger 41 becomes an evaporator is performed in the refrigerant circuit 10.

The high-pressure refrigerant that has been discharged from the compressor 21 exchanges heat with the outdoor air and condenses in the outdoor heat exchanger 23. The refrigerant that has passed through the outdoor heat exchanger 23 has its pressure reduced when it passes through the expansion valve 24 and thereafter exchanges heat with the room air and evaporates in the indoor heat exchanger 41. Then, the air whose temperature has fallen as a result of exchanging heat with the refrigerant is blown out into an air conditioning target space. The refrigerant that has passed through the indoor heat exchanger 41 is sucked into the compressor 21 and is compressed.

### (Heating Operation)

At the time of the heating operation, the four-way switching valve 22 is set in the state indicated by the solid lines in FIG. 1. When the compressor 21 is driven in this state, a vapor-compression refrigeration cycle where the outdoor heat exchanger 23 becomes an evaporator and the indoor heat exchanger 41 becomes a condenser is performed in the refrigerant circuit 10.

The high-pressure refrigerant that has been discharged from the compressor 21 exchanges heat with the room air and condenses in the indoor heat exchanger 41. Then, the air whose temperature has risen as a result of exchanging heat with the refrigerant is blown out into the air conditioning target space. The condensed refrigerant has its pressure reduced when it passes through the expansion valve 24 and thereafter exchanges heat with the outdoor air and evaporates in the outdoor heat exchanger 23. The refrigerant that has passed through the outdoor heat exchanger 23 is sucked into the compressor 21 and is compressed.

When the compressor 21 at the time of the heating operation and particularly at the time of startup is not sufficiently warm, the electromagnetic induction heating unit 6 heats the accumulator pipe 10f, whereby the compressor 21 can compress the refrigerant that has been warmed. As a result, the temperature of the gas refrigerant discharged from the compressor 21 rises, and heating capacity insufficiency at the time of startup is compensated.

### (Defrosting Operation)

When the heating operation has been performed, moisture included in the air condenses as dew condensation on the surface of the outdoor heat exchanger 23, turns into frost or freezes, and covers the surface of the outdoor heat exchanger 23, whereby the heat exchange performance drops. For this reason, the defrosting operation is performed in order to melt the frost or ice adhering to the outdoor heat exchanger 23. The defrosting operation is performed in the same cycle as the cooling operation.

The high-pressure refrigerant that has been discharged from the compressor 21 exchanges heat with the outdoor air and condenses in the outdoor heat exchanger 23. Because of the radiation of heat from that refrigerant, the frost or ice covering the outdoor heat exchanger 23 is melted. The condensed refrigerant has its pressure reduced when it passes through the expansion valve 24 and thereafter exchanges heat with the room air and evaporates in the indoor heat exchanger 41. At this time, the indoor fan 42 is stopped. The reason is because if the indoor fan 42 runs, the air that has been cooled will be blown out into the air conditioning target space and will detract from comfort. Then, the refrigerant that has passed through the indoor heat exchanger 41 is sucked into the compressor 21 and is compressed.

Further, at the time of the defrosting operation, the electromagnetic induction heating unit 6 heats the accumulator pipe 10f, whereby the compressor 21 can compress the refrigerant that has been warmed. As a result, the temperature of the gas refrigerant discharged from the compressor 21 rises and the defrosting capability improves.

Further, at the time of the defrosting operation, the high-pressure refrigerant that has been discharged from the compressor 21 also flows in the hot gas bypass 10h. Even in a case where ice is growing on the bottom plate 2b of the outdoor unit 2, that ice is melted by the radiation of heat from the refrigerant traveling through the hot gas bypass 10h.

### (Stop Control of Compressor, Indoor Fan, and Electromagnetic Induction Heating Unit)

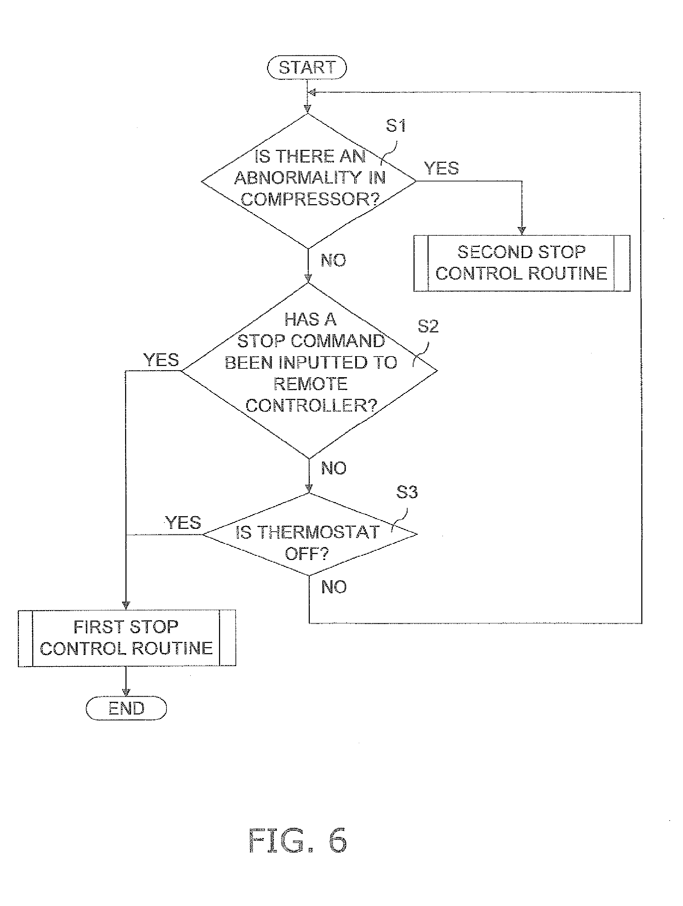

The timings of the stopping the compressor 21, the indoor fan 42, and the electromagnetic induction heating unit 6 at the time of the heating operation or at the time of the defrosting operation in which the electromagnetic induction heating unit 6 is driven will be described below with reference to FIG. 6.

The processing pertaining to FIG. 6 is started by the outdoor controller 11a at the time the compressor 21 is driven.

First, in step S1, the outdoor controller 11a determines whether or not there is an abnormality in the compressor 21. Whether or not there is an abnormality in the compressor 21 is determined at any time by the outdoor controller 11a in parallel with the processing pertaining to FIG. 6 in accordance with a preset logic. In a case where it is determined that there is an abnormality in the compressor 21, a second stop control routine is executed, and in a case where it is determined that there is no abnormality in the compressor 21, the processing advances to step S2.

In step S2, the outdoor controller 11a determines whether or not a stop command for stopping the air conditioning operation has been inputted to the remote controller 44. In a case where it is determined that a stop command for stopping the air conditioning operation has been inputted to the remote controller 44, a first stop control routine is executed, and in a case where it is determined that a stop command for stopping the air conditioning operation has not been inputted to the remote controller 44, the processing advances to step S3.

In step S3, the outdoor controller 11a determines whether or not there has been a thermostat off determination. "thermostat off determination" means that a room temperature Tr has reached the set temperature Ts of the indoor unit 4 and it is determined that there is no need for a thermostat on operation. Whether or not there has been a thermostat off determination is determined at any time by the outdoor controller 11a in parallel with the processing pertaining to FIG. 6 in accordance with a preset logic. In a case where it is determined that there has been a thermostat off determination, the first stop control routine is executed, and in a case where it is determined that there has not been a thermostat off determination, the processing returns to step S1.

### <First Stop Control Routine>

The first stop control routine is executed as follows by the outdoor controller 11a.

The outdoor controller 11a first determines the current operation mode; if the current operation mode is the defrosting operation mode, the outdoor controller 11a executes the following processing immediately after standing by until the defrosting operation ends, and if the current operation mode is a mode other than the defrosting operation mode, that is, the heating operation mode, the outdoor controller 11a executes the following processing immediately without standing by until the defrosting operation ends.

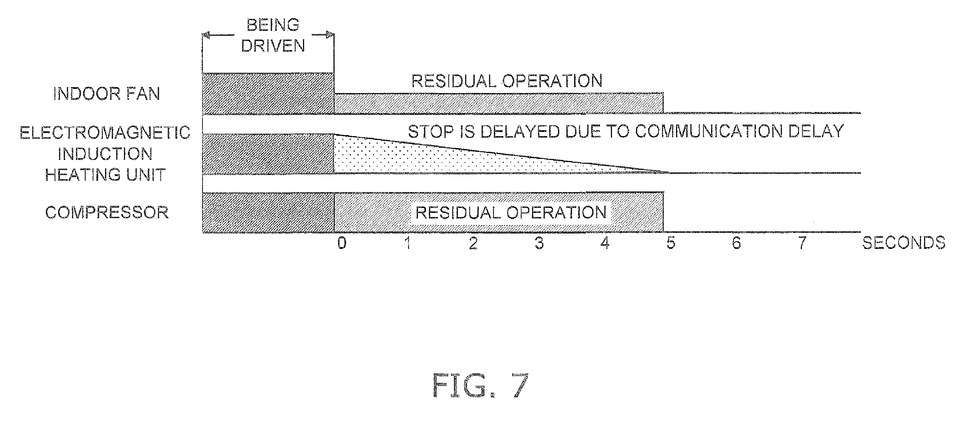

FIG. 7 is a timing chart of the stopping of the compressor 21, the indoor fan 42, and the electromagnetic induction heating unit 6 at the time of execution of the first stop control routine. 0 seconds in FIG. 7 is based on the later of the point in time when the first stop control routine starts and the point in time when the defrosting operation ends. The outdoor controller 11 a issues a stop signal for stopping the electromagnetic induction heating unit 6 to the heating unit controller 7 at the timing of 0 seconds in FIG. 7. Further, at the same timing of 0 seconds in FIG. 7, the outdoor controller 11a issues a signal ordering that the indoor fan 42 be rotated at a predetermined low speed (it is desirable for this speed to be the next smallest speed after stop or a low speed conforming thereto) to the indoor controller 11b. Thereafter, the outdoor controller 11a stands by for 5 seconds and issues a stop signal for stopping the compressor 21 to the inverter board 21a at the timing of 5 seconds in FIG. 7, and at the same timing of 5 seconds in FIG. 7, the outdoor controller 11a issues a stop command ordering that the indoor fan 42 be immediately stopped to the indoor controller 11b.

Because of the above, the first stop control routine ends and, together therewith, the processing shown in FIG. 6 also ends.

The reason the first stop control routine is executed in this embodiment is as follows. The heating unit controller 7 is designed to cause the electromagnetic induction heating unit 6 to immediately stop when the heating unit controller 7 receives the stop signal for stopping the electromagnetic induction heating unit 6 from the outdoor controller 11a. However, from the time when the outdoor controller 11a issues that stop signal to until the heating unit controller 7 actually receives that stop signal and stops the electromagnetic induction heating unit 6a, a delay in communication of 0 seconds to 5 seconds is predicted. This is because the heating unit controller 7 and the indoor controller 11 b are connected in parallel to the outdoor controller 11a-that is, because the heating unit controller 7 and the indoor controller 11b share the same communication port on the outdoor controller 11a. On the other hand, because the inverter board 21a and the outdoor controller 11a are interconnected via a dedicated communication port, it is conceivable for the compressor 21 to stop at substantially the same time as when the outdoor controller 11a issues the stop signal for stopping the compressor 21 to the inverter board 21a. So if the stop signal for stopping the electromagnetic induction heating unit 6 and the stop signal for stopping the compressor 21 have been issued at the same time from the outdoor controller 11a, it is expected that the stopping of the electromagnetic induction heating unit 6 will be 0 seconds to 5 seconds later than the stopping of the compressor 21.

However, in the first stop control routine, the timing when the outdoor controller 11a issues the stop signal for stopping the compressor 21 to the inverter board 21 a is set to 5 seconds after the outdoor controller 11a issues the stop signal for stopping the electromagnetic induction heating unit 6 to the heating unit controller 7. Consequently, even if a delay in communication of 0 seconds to 5 seconds arises between the outdoor controller 11a and the heating unit controller 7, a circumstance in which the electromagnetic induction heating unit 6 continues acting after the compressor 21 stops becomes avoided. In other words, even though the circumstance is one where the compressor 21 stops and the refrigerant does not circulate, or virtually does not circulate, inside the refrigerant circuit 10, "the heating of an empty part" in which the electromagnetic induction heating unit 6 acts is suppressed.

Further, in the first stop control routine, the timing of the issuance of the stop signal for stopping the indoor fan 42 is also, like the timing of the issuance of the stop signal for stopping the compressor 21, a timing of 5 seconds in FIG. 7. This is because the high pressure side of the refrigerant circuit 10 can excessively rise if the compressor 21 is acting even though the indoor fan 42 is stopped. In other words, as the purpose of operating the indoor fan 42 during the 0 seconds to 5 seconds in FIG. 7 is to prevent an excessive rise on the high pressure side of the refrigerant circuit 10, the indoor fan 42 in that period is designed to rotate at the predetermined low speed.

### <Second Stop Control Routine>

The second stop control routine is executed as follows by the outdoor controller 11a.

Immediately when the second stop control routine starts, the outdoor controller 11a simultaneously issues a stop signal for stopping the compressor 21 to the inverter board 21a, a stop signal for stopping the electromagnetic induction heating unit 6 to the heating unit controller 7, and a stop signal ordering that the indoor fan 42 be immediately stopped to the indoor unit controller 11b. That is, in the second stop control routine, which is processing in a case where an abnormality has been detected in the compressor 21, the outdoor controller 11 a issues a stop signal for stopping the compressor 21 to the outdoor controller 11a without waiting for the reliable stopping of the electromagnetic induction heating unit 6 like in the first stop control routine (that is, before the elapse of 5 seconds after the issuance of the stop signal for stopping the electromagnetic induction heating unit 6).

Because of the above, the second stop control routine ends and, together therewith, the processing shown in FIG. 6 also ends.

### <Characteristics>

### (1)

In the above-described embodiment, the heating unit controller 7 and the indoor controller 11b are connected in parallel to the outdoor controller 11a, and it becomes easy for a delay in communication to arise between the outdoor controller 11a and the heating unit controller 7.

However, in the above-described embodiment, the timing of the issuance of the stop signal for stopping the compressor 21 is delayed 5 seconds from the timing of the issuance of the stop signal for stopping the electromagnetic induction heating unit 6, and the compressor 21 is designed to residually operate. Consequently, even if a delay in communication has arisen between the outdoor controller 11a and the heating unit controller 7, a circumstance where the electromagnetic induction heating unit 6 continues operating even after the compressor 21 stops is avoided, and the heating of an empty part by the electromagnetic induction heating unit 6 is suppressed.

### (2)

Further, in the above-described embodiment, the timing of the issuance of the stop signal for stopping the indoor fan 42 is also, like in the case of the compressor 21, delayed 5 seconds from the timing of the issuance of the stop signal for stopping the electromagnetic induction heating unit 6, and the indoor fan 42 is also designed to residually operate together with the compressor 21. Consequently, a circumstance where the compressor 21 continues operating even after the indoor fan 42 stops is avoided, and an excessive rise on the high pressure side of the refrigerant circuit 10 is prevented.

Further, the residual operation of the indoor fan 42 is executed at a relatively low speed. This is because, as the purpose of the residual operation of the indoor fan 42 is to prevent an excessive rise on the high pressure side of the refrigerant circuit 10, it suffices for the speed to be a speed sufficient enough to serve that purpose.

### <Other Embodiments>

### (1)

The processing pertaining to FIG. 6 of the above-described embodiment can also be applied to air conditioning apparatus of a different type than the air conditioning apparatus 1. For example, the processing can also be applied to a multi-type air conditioning apparatus.

In the case of introducing the processing pertaining to FIG. 6 to a multi-type air conditioning apparatus where multiple indoor units are connected in parallel to an outdoor unit (a compressor), it is desirable to design the air conditioning apparatus as follows.

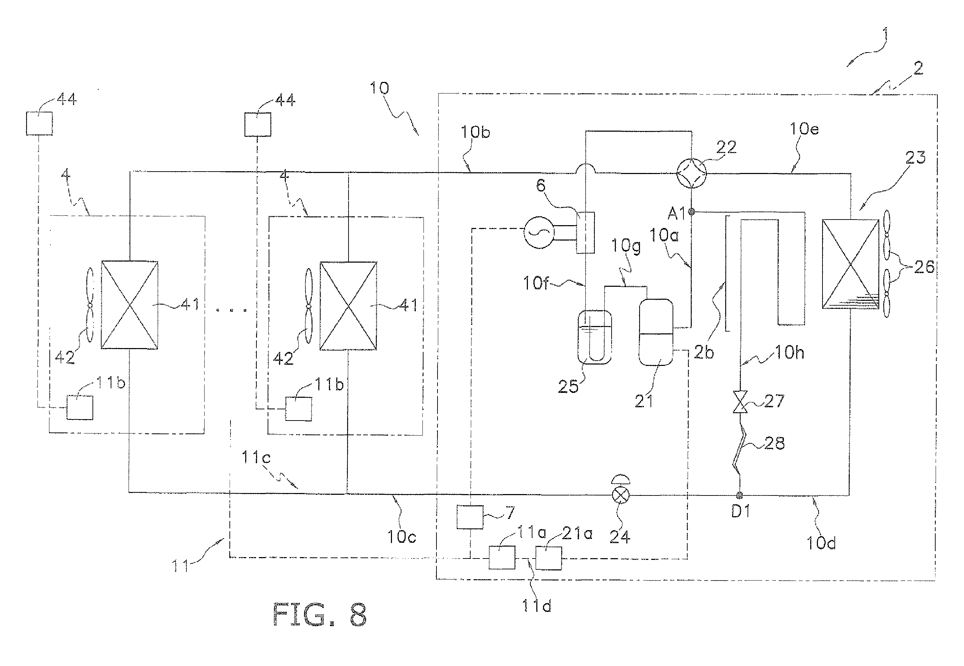

In the above-described embodiment pertaining to the air conditioning apparatus 1 having one each of the indoor unit 4 and the outdoor unit 2, the time difference between the timing of the issuance of the stop signal for stopping the electromagnetic induction heating unit 6 and the timing of the issuance of the stop signals for stopping the compressor 21 and the indoor fan 42 in the first stop control routine is equally 5 seconds. However, as shown in FIG. 8, in a case where the air conditioning apparatus 1 is a multi-type air conditioning apparatus having multiple indoor units 4, the outdoor controller 11a may be designed to use the number of the indoor units 4 there are as a parameter and lengthen the time difference the greater the number of the indoor units 4 there are.

In order to realize this embodiment, it is conceivable, for example, for the outdoor controller 11a to call out for responses to all of the indoor controllers 11b included in the same refrigerant circuit 10 at an appropriate timing so that the outdoor controller 11a can thereby grasp the number of the indoor controllers 11b-that is, the number of the indoor units 4-connected to the outdoor controller 11a. Further, it is conceivable for the appropriate timing here to be at the time of a test operation when installing the air conditioning apparatus 1 on site or at the time of startup of the compressor 21.

Usually, it is expected that the greater the number of the indoor units 4 there are, the longer the delay time in communication between the outdoor controller 11a and the electromagnetic induction heating unit 6 will become. However, here, because the residual operating time of the compressor 21 and the indoor fan 42 is longer the greater the number of the indoor units 4 there are, residual operations of appropriate lengths are executed.

In a multi-type air conditioning apparatus, ordinarily the refrigerant circuit includes multiple indoor heat exchangers, and the multiple indoor heat exchangers are connected in parallel to the compressor and are individually housed in multiple indoor units.

### (2)

In the first stop control routine of the above-described embodiment, the signal for stopping the electromagnetic induction heating unit 6 and the signal ordering that the indoor fan 42 be rotated at the predetermined low speed are issued at the same timings. However, these timings may also be different.

### (3)

In the first stop control routine of the above-described embodiment, the signal for stopping the compressor 21 and the stop signal ordering that the indoor fan 42 be immediately stopped are issued at the same timings. However, these timings may also be different. Because a delay in communication can arise between the outdoor controller 11a and the indoor controller 11b, for example, the stop signal ordering that the indoor fan 42 be immediately stopped may also be issued before the signal for stopping the compressor 21.

### INDUSTRIAL APPLICABILITY

The present invention is useful as an air conditioning apparatus that can suppress the heating of an empty part by a refrigerant heating unit and as a method of controlling the air conditioning apparatus.

### REFERENCE SIGNS LIST

- 1: Air Conditioning Apparatus
- 2: Outdoor Unit
- 4: Indoor Unit
- 6: Electromagnetic Induction Heating Unit (Refrigerant Heating Unit)
- 7: Heating Unit Controller
- 10: Refrigerant Circuit
- 11: Controller
- 11a: Outdoor Controller (Stop Signal Controller)
- 11b: Indoor Controller
- 21: Compressor
- 23: Outdoor Heat Exchanger
- 24: Expansion Valve (Pressure Reducing Mechanism)
- 41: Indoor Heat Exchanger
- 42: Indoor Fan (Indoor Blower)

### CITATION LIST

### <Patent Literature>

Patent Citation 1: JP-A No. 2007-255736

## Claims

1. An air conditioning apparatus (1) comprising:
a refrigerant circuit (10) that includes a compressor (21), an indoor heat exchanger (41), a pressure reducing mechanism (24), and an outdoor heat exchanger (23);
a refrigerant heating unit (6) that heats refrigerant flowing through the refrigerant circuit (10); and
a stop signal controller (11a) which, in a case of causing the compressor (21) to stop at a time when the compressor (21) and the refrigerant heating unit (6) are both operating, executes first stop control that issues a stop signal for stopping the refrigerant heating unit (6) and then, after the elapse of a first amount of time, issues a stop signal for stopping the compressor (21).

2. The air conditioning apparatus (1) according to claim 1, further comprising a heating unit controller (7) that controls the action of the refrigerant heating unit (6), wherein the first stop control is control that issues the stop signal for stopping the refrigerant heating unit (6) to the heating unit controller (7) and then, after the elapse of the first amount of time, issues the stop signal for stopping the compressor (21).

3. The air conditioning apparatus (1) according to claim 1 or 2, further comprising an indoor blower (42) that blows air to the indoor heat exchanger (41), wherein the first stop control is control that issues the stop signal for stopping the refrigerant heating unit (6) and then, after the elapse of a second amount of time, issues a stop signal for stopping the indoor blower (42).

4. The air conditioning apparatus (1) according to claim 3, wherein the first stop control is control which, before issuing the stop signal for stopping the indoor blower (42), issues an operation signal that causes the indoor blower (42) to rotate at a low speed.

5. The air conditioning apparatus (1) according to any of claims 1 to 4, further comprising an indoor controller (11b) that is housed in an indoor unit (4) together with the indoor heat exchanger (41), wherein the refrigerant heating unit (6) and the indoor controller (11b) are connected in parallel to the stop signal controller (11a).

6. The air conditioning apparatus (1) according to any of claims 1 to 5, wherein in a case where it is judged that the compressor (21) is in an abnormal state, the stop signal controller (11a) does not execute the first stop control and executes second stop control that issues the stop signal for stopping the refrigerant heating unit (6) and then, before the elapse of the first amount of time, issues the stop signal for stopping the compressor (21).

7. The air conditioning apparatus (1) according to any of claims 1 to 6, wherein
the refrigerant circuit includes a plurality of the indoor heat exchangers (41) that are connected in parallel to the compressor (21) and are individually housed in multiple indoor units (4), and
the stop signal controller (11a) lengthens the first amount of time the greater the number of the indoor units (4) there are.

8. The air conditioning apparatus (1) according to any of claims 1 to 7, wherein the first stop control is control which, at the time of a defrosting operation, waits for the end of the defrosting operation, issues the stop signal for stopping the refrigerant heating unit (6), and then, after the elapse of the first amount of time, issues the stop signal for stopping the compressor (21).

9. A method of controlling an air conditioning apparatus having
a refrigerant circuit (10) that includes a compressor (21), an indoor heat exchanger (41), a pressure reducing mechanism (24), and an outdoor heat exchanger (23) and
a refrigerant heating unit (6) that heats refrigerant flowing through the refrigerant circuit (10),
the method comprising the step of, in a case of causing the compressor (21) to stop at a time when the compressor (21) and the refrigerant heating unit (6) are both operating, executing first stop control that issues a stop signal for stopping the refrigerant heating unit (6) and then, after the elapse of a first amount of time, issues a stop signal for stopping the compressor (21).
